# EUROPEAN PATENT SPECIFICATION

(11) **EP 1 867 884 B1**
(45) Date of publication and mention of the grant of the patent: **20.07.2011**
(21) Application number: 07107526.1
(22) Date of filing: 04.05.2007
(51) Int. Cl.: F16D 1/08, F16D 3/38

(54) **Improvements relating to vehicle steering**
Verbesserungen im Zusammenhang mit der Lenkung von Fahrzeugen
Améliorations associées à la direction d'un véhicule

(30) Priority: 16.06.2006 GB 0611939
(43) Date of publication of application: 19.12.2007
(73) Proprietor: Nissan Motor Manufacturing (UK) Ltd., Cranfield Bedfordshire MK43 0DB (GB)
(72) Inventor: Rendell, Tom c/o Nissan Motor Manufacturing (UK) Ltd., Cranfield, Bedfordshire MK43 0DB (GB)
(74) Representative: Hufton, Victoria Alice

(56) References cited:
- WO-A-2004/063587
- DE-A1- 3 839 324
- DE-A1- 19 847 526
- US-A- 4 537 523

## Description

The invention relates to an apparatus for reducing the risk of incorrect assembly of vehicle steering systems, thus reducing the risk of a dangerous failure while in use. In particular, the invention is concerned with ensuring that a steering column is correctly engaged with a steering rack.

It is common for car steering systems to include a steering wheel and a steering column which is axially engageable with a steering rack intermediate shaft (SRIS). The steering column and SRIS have female and male members respectively which are held in their engaged position by a bolt which secures the female member about the male member.

US 4,537,523 discloses a device for detecting the position of a shaft in a coupling element, and in particular a universal joint yoke. The device comprises a resiliently yieldable element mounted between the ears and extending across the apertures formed in the ears for preventing the positioning of the tightening screw in the absence of the shaft.

DE 198 47 526 A1 discloses a clamped joint having the features defined in the preamble to claim 1.

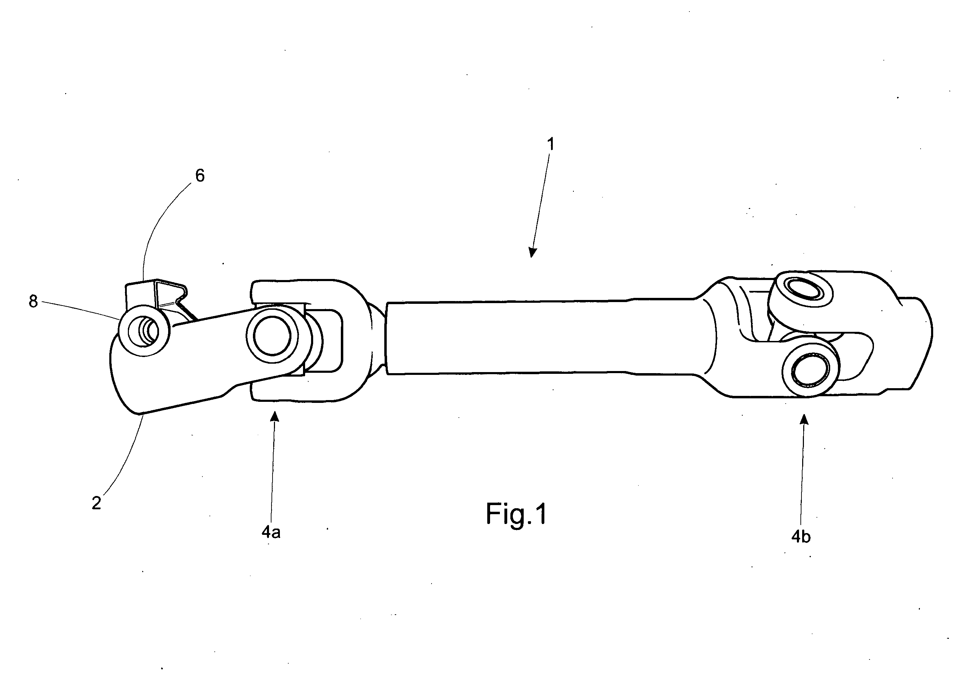

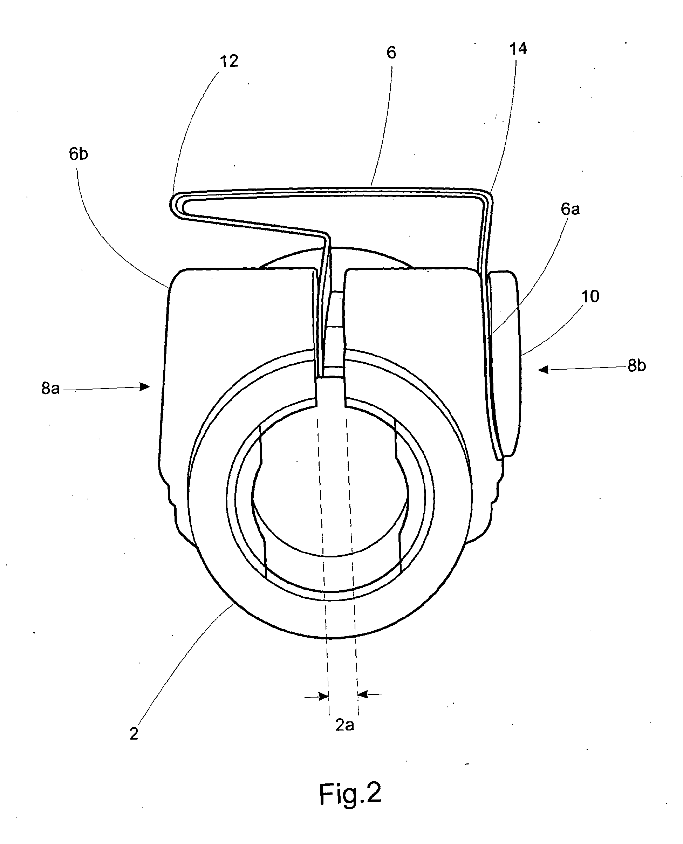

A steering column 1 is shown in Figure 1 in isolation from its corresponding SRIS (not shown). A female member 2, into which a male member of the SRIS is inserted, is attached to a first universal joint 4a. As can be seen in Figure 2, the female member 2 has a C-shaped cross-section defining a gap 2a. Integral to a first end of the C-section is a threaded hole 8a, and integral to a second end of the C-section is a clearance hole 8b. A bolt (not shown) is inserted firstly through the clearance hole 8b, then through the gap 2a and finally through the threaded hole 8a such that, as it is tightened, the male member of the SRIS is clamped by the female member 2.

If the male member is not fully inserted into the female member 2 before the bolt is tightened, disengagement of the SRIS from the steering column 1 may occur. If the male and female members disengage while the car is in use, the resulting loss of steering control could be fatal.

To minimise the risk of incomplete engagement during assembly of the steering system, a flexible member 6, also known as a "clip", is provided. A first end portion of the flexible member 6 is in the form of a flattened ring 6a which is secured around clearance hole 8b by a tubular rivet 10, and a second portion 6b extends through the gap 2a and is suspended within the female member 2. Complete insertion of the male member of SRIS into the female member 2 causes the suspended second end portion 6b of the flexible member 6 to move away from the gap 2a. The second end portion 6b thus prevents insertion of the bolt into the threaded hole 8a unless the male member is fully engaged with the female member 2.

As can be seen in Figure 2, the flexible member 6 extends upwardly from the tubular rivet 10 for a relatively short distance before turning 90° at a corner 14, and then extending a distance approximately equal to the outer diameter of the female member 2 in a direction parallel to the axis of the tubular rivet 10. At the point where the flexible member 6 is above the outer end of the threaded hole 8a (as viewed in the drawing), the flexible member 6 turns through approximately 170° at a fold 12 so that it extends inwardly and towards the female member 2 until it is above the gap 2a, where it extends through the gap 2a to prevent the bolt from being threaded into the threaded hole 8a in the absence of a male member fully inserted in the female member 2.

In use, the rotation of the steering wheel is transmitted to the steering column 1 which rotates about its longitudinal axis, in turn, causing the flexible member 6 to rotate. Since the steering column 1 extends through the floor of the vehicle's cabin, the flexible member 6, for example at fold 12, can become caught on the cabin's carpet. Such interference can affect steering, typically making it difficult to rotate the steering wheel. The interference can also cause the flexible member 6 to deform, thereby reducing its elastic properties (discussed below). Furthermore, as a result of the method of attachment of the flexible member 6, it is not possible to replace it if damage occurs.

It has been proposed to shorten the distance between the fold 12 and the corner 14, and to eliminate the fold 12 so that the flexible member 6 extends only partly across the female member 2 and then through the gap 2a without initially passing over the gap 2a. However, the flexible member 6 must possess sufficient flexibility to enable the second end portion 6b to move out of the path of the bolt as the male member is engaged, and to return if the male member is disengaged. It has been found that a flexible member of this type will permanently deform after the male and female members engage for the first time, and will not return to its original shape when the male member is disengaged.

It would therefore be desirable to provide an arrangement which mitigates the above problems.

According to the present invention there is provided an arrangement for permitting a male member to be secured within a female member by a clamp only when the male member is fully inserted therein, the arrangement comprising a flexible member arranged for attachment at a first end portion to the female member; wherein the path of the flexible member extends between the first and a second end portion and is arranged to follow a path which extends around the outer profile of the female member and in close proximity thereto; and the second end portion is arranged for suspension within the female member in the absence of a fully inserted male member, and which, when so suspended, serves to prevent the operation of the clamp; and the female member comprises a threaded hole and a clearance hole and the clamp comprises a bolt arranged to pass through the clearance hole and to be secured within the threaded hole to perform a clamping action; characterised in that: the flexible member defines an aperture aligned with the threaded hole and through which the threaded end of the bolt can pass, thereby to restrict the movement of the flexible member about the female member.

By following a path which extends around the female member, the likelihood of the flexible member becoming caught on the cabin's carpet is reduced, and the flexible member has sufficient length to allow the second end portion to move in and out of the path of the bolt without permanent deformation. Additionally, since the flexible member is not folded back on itself, there are no protrusions, reducing the risk of snagging. Furthermore, the resulting length and shape of the flexible member reduces the force required to fully engage the male and female members. The alignment of the aperture in the flexible member through which the threaded end of the bolt can pass with the threaded hole restricts the degree of movement of the flexible member about the female member, thus preventing extreme deformation of the flexible member in the event of snagging.

In an example, the flexible member further comprises an aperture arranged to be aligned in use with the clearance hole.

In a further example, the flexible member is attached to the female member by a tubular rivet fixed around said clearance hole.

The path of the flexible member is in close proximity to an outer profile of the female member to minimise the risk of snagging as much as possible. The path of the flexible member is preferably G-shaped.

Preferably, the flexible member extends around the female member about the axis of insertion of the male member into the female member. In such an embodiment, the axis of the bolt may be substantially perpendicular to the direction of insertion of the male member into the female member.

In an example, the female member has a substantially C-shaped cross-section, and the two ends of the C-section define a gap within which the flexible member is arranged to be suspended.

The invention further resides in a vehicle steering column comprising an arrangement as described above.

In order that this invention may be more readily understood, reference will now be made, by way of example, to the accompanying drawings in which:
Figure 1 is side view of a steering column comprising a female member attached to which is a flexible member according to the prior art;
Figure 2 is an end view of the female member shown in Figure 1;
Figure 3 illustrates a portion of a steering column, to which is attached a flexible member according to a first embodiment of the invention, and an end portion of a male member; and
Figure 4 is a side view of the female member and flexible member of Figure 3.

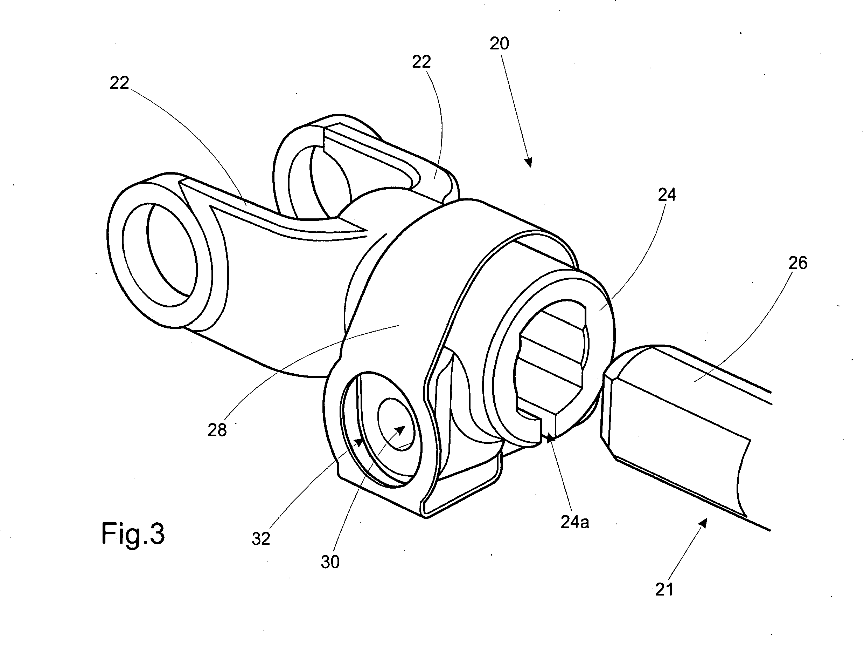

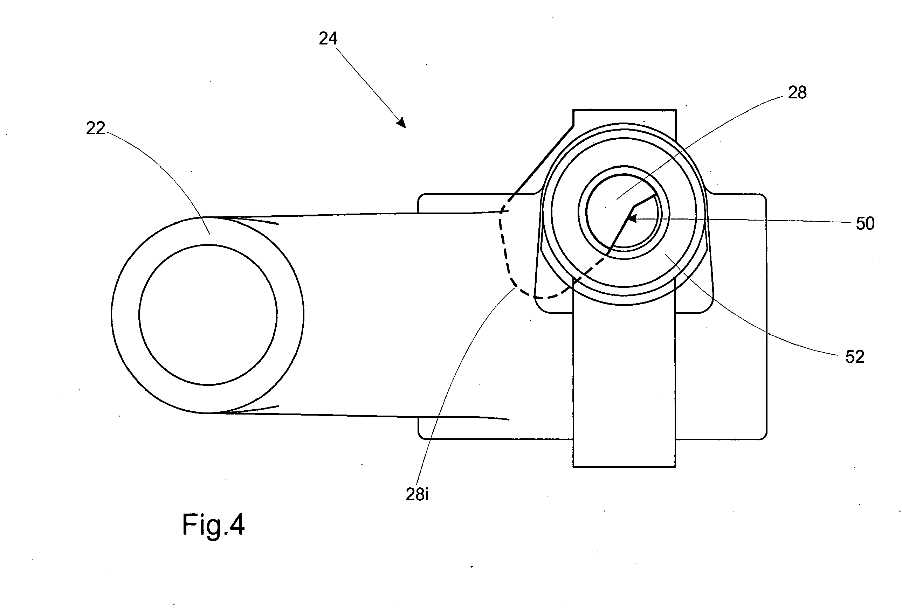

Turning now to Figure 3 and Figure 4 of the drawings, an embodiment of the invention is described. Elements of a vehicle steering system, namely a portion of a steering column 20 and an end portion of a SRIS 21 which comprises a male member 26, are shown. At one end of the portion of a steering column 20 is a yoke 22 which is arranged to form a universal joint with the remaining portion of the steering column (not shown). At the other end, a female member 24 is opposed to the male member 26. A flexible member 28 extends around the female member 24 from a clearance hole 50 (shown in Figure 4) around which it is attached by a tubular rivet 52, closely following the outer contour of the female member 24. The flexible member 28 extends across a threaded hole 30, at which point it forms an aperture 32 through which the threaded end of a bolt (not shown) can extend. The bolt, in combination with the clearance hole 50 and the threaded hole 30, the axes of which are aligned and perpendicular to the direction of engagement of the male member 26 in the female member 24, serves to clamp the male member 26 within the female member 24 when the male and female members 26, 24 are fully engaged.

In order to prevent incomplete engagement of the male and female members 26, 24 the flexible member 28 extends through a gap 24a in the side of the female member 24, and is suspended within the female member 24, thus preventing passage of the bolt, through the gap 24a and consequently through the threaded hole 30.

Figure 4 shows the female member 24 viewed along the axis of the clearance hole 50. As can be seen from the drawing, in the absence of full engagement of the male member 26, the flexible member 28 blocks the path of the bolt. However, as the male member 26 becomes fully engaged within the female member 24, the second end portion (indicated by dashed line 28i) of the flexible member 28, is caused to move out of the gap 24a, and thereby out of the path of the bolt, enabling the bolt to pass through the gap 24a and to be secured within the threaded hole 30 so as to clamp the male member 26 within the female member 24. Once clamped, the rotation of the steering system's associated steering wheel is transmitted through the steering column to the SRIS with a reduced risk of damage to or snagging of the flexible member 28.

## Claims

1. An arrangement for permitting a male member (26) to be secured within a female member (24) by a clamp only when the male member (26) is fully inserted therein, the arrangement comprising:
a flexible member (28) arranged for attachment at a first end portion to the female member (24); wherein:
the path of the flexible member (28) extends between the first and a second end portion and is arranged to follow a path which extends around the outer profile of the female member (24) and in close proximity thereto;
and the second end portion is arranged for suspension within the female member (24) in the absence of a fully inserted male member (26), and which, when so suspended, serves to prevent the operation of the clamp;
and the female member (24) comprises a threaded hole (30) and a clearance hole (50) and the clamp comprises a bolt arranged to pass through the clearance hole (50) and to be secured within the threaded hole (30) to perform a clamping action; **characterised in that**:
the flexible member (28) defines an aperture aligned with the threaded hole (30) and through which the threaded end of the bolt can pass, thereby to restrict the movement of the flexible member (28) about the female member (24).

2. The arrangement of Claim 1, wherein the flexible member (28) further comprises an aperture arranged to be aligned in use with the clearance hole (50).

3. The arrangement of Claim 2, wherein the flexible member (28) is attached to the female member (24) by a tubular rivet (52) fixed around said clearance hole (50).

4. The arrangement of any preceding claim, wherein the path of the flexible member (28) is substantially G-shaped.

5. The arrangement of any preceding claim, wherein the flexible member (28) extends around the female member (24) about the axis of insertion of the male member (26) into the female member (24).

6. The arrangement of any preceding claim, wherein the axis of the bolt is substantially perpendicular to the direction of insertion of the male member (26) into the female member (24).

7. The arrangement of any preceding claim, wherein the cross-section of the female member (24) is substantially C-shaped and the two ends of the C-section define a gap within which the flexible member (28, 48, 68) is arranged to be suspended.

8. A vehicle steering column comprising an arrangement as defined in any of the preceding claims.

## Patentansprüche

1. Anordnung zum Zulassen, dass ein Steckglied (26) nur dann von einer Klemme in einem Aufnahmeglied (24) fixiert wird, wenn das Steckglied (26) vollständig darin eingesteckt ist, wobei die Anordnung Folgendes umfasst:
ein flexibles Glied (28), das zum Anbringen an einem ersten Endabschnitt des Aufnahmeglieds (24) angeordnet ist, wobei:
sich der Pfad des flexiblen Glieds (28) zwischen dem ersten und einem zweiten Endabschnitt erstreckt und dazu angeordnet ist, einem Pfad zu folgen, der sich um das äußere Profil des Aufnahmeglieds (24) und in unmittelbarer Nähe desselben erstreckt;
und der zweite Endabschnitt in Abwesenheit eines vollständig eingesteckten Steckglieds (26) zum Hängen im Aufnahmeglied (24) angeordnet ist und, wenn er so hängt, dazu dient, die Betätigung der Klemme zu verhindern;
und das Aufnahmeglied (24) ein Gewindeloch (30) und ein Abstandsloch (50) umfasst und die Klemme einen Gewindebolzen umfasst, der dazu angeordnet ist, durch das Abstandsloch (50) zu gelangen und im Gewindeloch (30) fixiert zu werden, um eine Klemmwirkung auszuführen; **dadurch gekennzeichnet, dass**:
das flexible Glied (28) eine Öffnung definiert, die mit dem Gewindeloch (30) fluchtet und durch die das Gewindeende des Gewindebolzens gelangen kann, um dadurch die Bewegung des flexiblen Glieds (28) um das Aufnahmeglied zu begrenzen.

2. Anordnung nach Anspruch 1, wobei das flexible Glied (28) weiter eine Öffnung umfasst, die dazu angeordnet ist, in Gebrauch mit dem Abstandsloch (50) zu fluchten.

3. Anordnung nach Anspruch 2, wobei das flexible Glied (28) mit einem um das genannte Abstandsloch (50) befestigten Röhrenniet (52) am Aufnahmeglied (24) angebracht ist.

4. Anordnung nach einem der vorangehenden Ansprüche, wobei der Pfad des flexiblen Glieds (28) im Wesentlichen G-förmig ist.

5. Anordnung nach einem der vorangehenden Ansprüche, wobei sich das flexible Glied (28) um die Einsteckachse des Steckglieds (26) in das Aufnahmeglied (24) um das Aufnahmeglied (24) herum erstreckt.

6. Anordnung nach einem der vorangehenden Ansprüche, wobei die Achse des Gewindebolzens im Wesentlichen senkrecht zur Einsteckrichtung des Steckglieds (26) in das Aufnahmeglied (24) ist.

7. Anordnung nach einem der vorangehenden Ansprüche, wobei der Querschnitt des Aufnahmeglieds (24) im Wesentlichen C-förmig ist und die zwei Enden des C-Querschnitts einen Spalt definieren, in dem das flexible Glied (28, 48, 68) dazu angeordnet ist, zu hängen.

8. Fahrzeuglenksäule, umfassend eine Anordnung, wie sie in einem der vorangehenden Ansprüche definiert ist.

## Revendications

1. Agencement permettant l'assujettissement d'un élément mâle (26) dans un élément femelle (24) par une pince uniquement quand l'élément mâle (26) est entièrement inséré dans l'élément femelle, l'agencement comprenant :
un élément souple (28) agencé pour se fixer au niveau d'une première partie d'extrémité à l'élément femelle (24) ; dans lequel :
la trajectoire de l'élément souple (28) s'étend entre la première partie d'extrémité et une seconde partie d'extrémité et est agencée pour suivre une trajectoire qui s'étend autour du profil externe de l'élément femelle (24) et proche à celle-ci ;
et la seconde partie d'extrémité est agencée pour être suspendue à l'intérieur de l'élément femelle (24) en l'absence d'un élément mâle complètement inséré (26), et, quand elle est ainsi suspendue, elle sert à empêcher le fonctionnement de la pince ;
et l'élément femelle (24) comprend un trou fileté (30) et un trou de dégagement (50) et la pince comprend un boulon agencé pour passer à travers le trou de dégagement (50) et être assujetti dans le trou fileté (30) afin d'effectuer une action de serrage ; **caractérisé en ce que** :
l'élément souple (28) définit une ouverture alignée avec le trou fileté (30) et à travers lequel l'extrémité filetée du boulon peut passer, afin d'ainsi restreindre le mouvement de l'élément souple (28) autour de l'élément femelle (24).

2. Agencement selon la revendication 1, dans lequel l'élément souple (28) comprend en outre une ouverture agencée pour être alignée durant l'utilisation avec le trou de dégagement (50).

3. Agencement selon la revendication 2, dans lequel l'élément souple (28) est fixé à l'élément femelle (24) par un rivet tubulaire (52) fixé autour dudit trou de dégagement (50).

4. Agencement selon l'une quelconque des revendications précédentes, dans lequel la trajectoire de l'élément souple (28) est sensiblement en forme de G.

5. Agencement selon l'une quelconque des revendications précédentes, dans lequel l'élément souple (28) s'étend autour de l'élément femelle (24) autour de l'axe d'insertion de l'élément mâle (26) dans l'élément femelle (24).

6. Agencement selon l'une quelconque des revendications précédentes, dans lequel l'axe du boulon est sensiblement perpendiculaire au sens d'insertion de l'élément mâle (26) dans l'élément femelle (24).

7. Agencement selon l'une quelconque des revendications précédentes, dans lequel la coupe de l'élément femelle (24) est sensiblement en forme de C et les deux extrémités de la coupe en C définissent un espace dans lequel l'élément souple (28, 48, 68) est agencé pour y être suspendu.

8. Colonne de direction de véhicule comprenant un agencement tel que défini dans l'une quelconque des revendications précédentes.
